# EUROPÄISCHE PATENTSCHRIFT

(11) **EP 1 593 253 B1**
(45) Veröffentlichungstag und Bekanntmachung des Hinweises auf die Patenterteilung: **26.11.2008**
(21) Anmeldenummer: 04708318.3
(22) Anmeldetag: 05.02.2004
(51) Int. Cl.: H04L 29/06

(54) **VERFAHREN UND ANORDNUNG ZUR TRANSPARENTEN VERMITTLUNG DES DATENVERKEHRS ZWISCHEN DATENVERARBEITUNGSEINRICHTUNGEN SOWIE EIN ENTSPRECHENDES COMPUTERPROGAMM-ERZEUGNIS UND EIN ENTSPRECHENDES COMPUTERLESBARES SPEICHERMEDIUM**
METHOD AND SYSTEM FOR THE TRANSPARENT TRANSMISSION OF DATA TRAFFIC BETWEEN DATA PROCESSING DEVICES, CORRESPONDING COMPUTER PROGRAM PRODUCT, AND CORRESPONDING COMPUTER-READABLE STORAGE MEDIUM
PROCEDE ET DISPOSITIF DE TRANSMISSION TRANSPARENTE DU TRAFIC DE DONNEES ENTRE DES SYSTEMES DE TRAITEMENT DE DONNEES, PRODUIT DE PROGRAMME INFORMATIQUE CORRESPONDANT ET SUPPORT D'ENREGISTREMENT LISIBLE PAR ORDINATEUR CORRESPONDANT

(30) Priorität: 06.02.2003 DE 10305413
(43) Veröffentlichungstag der Anmeldung: 09.11.2005
(73) Patentinhaber: Innominate Security Technologies AG, 12489 Berlin (DE)
(72) Erfinder: JAENICKE, Lutz, 12347 Berlin (DE)
(74) Vertreter: Hengelhaupt, Jürgen
(86) Internationale Anmeldenummer: PCT/EP2004/001065
(87) Internationale Veröffentlichungsnummer: WO 2004/071047

(56) Entgegenhaltungen:
- STROTHER E: "Denial of service protection the nozzle" COMPUTER SECURITY APPLICATIONS, 2000. ACSAC '00. 16TH ANNUAL CONFERENCE NEW ORLEANS, LA, USA 11-15 DEC. 2000, LOS ALAMITOS, CA, USA,IEEE COMPUT. SOC, US, 11. Dezember 2000 (2000-12-11), Seiten 32-41, XP010529798 ISBN: 0-7695-0859-6
- WEBER W: "Firewall basics" TELECOMMUNICATIONS IN MODERN SATELLITE, CABLE AND BROADCASTING SERVICES, 1999. 4TH INTERNATIONAL CONFERENCE ON NIS, YUGOSLAVIA 13-15 OCT. 1999, PISCATAWAY, NJ, USA,IEEE, US, 13. Oktober 1999 (1999-10-13), Seiten 300-305, XP010359130 ISBN: 0-7803-5768-X
- "FIREWALL IN DER NETZWERKKARTE" CT MAGAZIN FUER COMPUTER TECHNIK, VERLAG HEINZ HEISE GMBH., HANNOVER, DE, Nr. 25, 2. Dezember 2002 (2002-12-02), Seite 44 XP001133324 ISSN: 0724-8679
- HARE ET AL: "FIREWALL ARCHITECTURE AND THEORY" FIREWALLS AND INTERNET SECURITY, XX, XX, 1996, Seiten 225-250, XP002917967

## Beschreibung

Die Erfindung betrifft ein Verfahren und eine Anordnung zur transparenten Vermittlung des Datenverkehrs zwischen Datenverarbeitungseinrichtungen sowie ein entsprechendes Computerprogramm-Erzeugnis und ein entsprechendes computerlesbares Speichermedium, welche insbesondere einsetzbar sind zum transparenten Einfügen, Verändern und/oder Entfernen von Datenpaketen aus dem Datenverkehr, indem ein zweites Computersystem (Vorschalt-Computersystem) in die Netzwerkanbindung eines Hauptrechners eingebracht wird und den Netzverkehr in erfindungsgemäßer Weise verarbeitet. Dabei können entweder selektiv einzelne Pakete und/oder Verbindungen oder alle Pakete und/oder Verbindungen betroffen sein.

Computersysteme, die an Netzwerke angeschlossen werden, identifizieren sich gegenüber den anderen Kommunikationspartnern mit Adressen. Ein am Internet angeschlossenes Computersystem, dass mittels IP (Internet Protokoll) mit anderen Computern kommuniziert, verwendet hierzu eine IP-Adresse. Wird als Transportmedium Ethernet benutzt, wird für die Ethernet-Pakete eine MAC-Adresse (Media Access Control) benutzt, ähnliches gilt zum Beispiel für WLAN (Wireless LAN).

Eingehende und ausgehende Verbindungen müssen darüber hinaus eindeutig identifiziert werden. Beim Internet-Protokoll geschieht dies über "Port"-Nummern. Je ein Paar von Adresse und Port beim Sender und Empfänger identifizieren eine Verbindung.

Die Adressdaten, also zum Beispiel MAC- und IP-Adresse, sind teilweise durch die Hardware vorgegeben (zum Beispiel MAC-Adresse einer Netzwerkhardware) oder müssen am Computer eingestellt werden oder werden durch den Computer selbst zu Beginn einer Sitzung von einem Server abgerufen (zum Beispiel DHCP (= Dynamic Host Configuration Protocol) für eine IP-Adresse).

Die Behandlung von Datenpaketen und/oder Verbindungen im betreffenden Umfeld wird vom OSI-Schichtenmodell (OSI = Open Systems Interconnection) in den Schichten 2 (Data Link Layer - Sicherungsschicht) und 3 (Network Layer - Vermittlungsschicht) beschrieben. Datenpakete und Verbindungen werden über physikalische Medien übertragen, wobei der Datentransport auf einem Medium entsprechend der Sicherungsschicht vorgenommen wird (zum Beispiel Ethernet-Frames bei einer Ethernet-Verkabelung). Der Datenaustausch zwischen verschiedenen Rechnern wird dann in der Vermittlungsschicht geregelt, zum Beispiel unter Verwendung von IP-Paketen.

### Schicht 2: Bridges und Switches

Datenpakete werden von einem Rechner zum anderen geschickt. Dabei wird der Transport der Datenpakete gegebenenfalls durch Geräte der Schicht 2 beeinflusst. Dies sind typischerweise Bridges und Switches, mit deren Hilfe die Verteilung der Datenpakete in die einzelnen Leitungsstränge reguliert wird. Geräte der Schicht 2 transportieren nur die Datenpakete, nehmen aber keine Veränderung der Datenpakete vor. Es werden keine neuen eigenständigen Datenpakete erzeugt.

Die Adressierung der Datenpakete in der Schicht 2 hängt vom Transportmedium ab. Auf einem Ethernet werden die MAC-Adressen zur Adressierung verwendet. Die Nutzlast, zum Beispiel ein IP-Paket, wird in einen Ethernet-Frame verpackt.

### Schicht 3: Router

Router werten die Adressinformationen der Schicht 3 aus, also zum Beispiel die IP-Adressen. Basierend auf diesen Adressen und Routing-Informationen werden die Datenpakete an andere Router oder den Zielrechner weitergeleitet. Dabei werden neue Datenpakete der Schicht 2 erzeugt, um den Datentransport auf den dazwischenliegenden Leitungen zu realisieren.

Auf einem Router können Datenpakete dahingehend verändert werden, dass große Datenpakete in mehrere kleine Datenpakete zerlegt oder wieder zusammengebaut werden (Fragmentierung).

### NAT-Router

Router können gegebenenfalls die IP-Verbindungsdaten (Adresse und Port) verändern und so die wahre Identität eines Rechners verbergen. Dies wird bei der Technik der NAT (Network Adress Translation) verwendet, um zum Beispiel weniger IP-Adressen vergeben zu müssen oder auch um eine interne Netzwerkstruktur zu verbergen.

### VPN-Router

Wird aus zwei entfernten Teilnetzen ein VPN (Virtual Private Network) aufgebaut, so werden auf dem dazwischenliegenden Transportweg die Datenpakete verändert (verschlüsselt), um zum Beispiel das unbefugte Abhören zu verhindern. Am Ziel angekommen, werden die Daten wieder in ihre ursprüngliche Form zurückgebracht. Während des Transports erscheinen die Daten gängigerweise (ESP-Protokoll, ESP = Encapsulating Security Payload) mit den Adressen der beiden VPN-Router.

### Proxy

Ein Proxy nimmt Verbindungen entgegen und baut selbst neue Verbindungen auf. Diese Technik wird häufig auf Firewalls bzw. NAT-Routern verwendet. Ein Proxy hat die volle Kontrolle über den Datenstrom. "Transparente Proxy"-Anordnungen sind bekannt, wobei hier von Transparenz gesprochen wird, wenn nicht ein spezielles Proxy-Protokoll Anwendung findet, sondern der Datenstrom auf dem Proxy-Rechner abgefangen und verarbeitet wird, ohne dass dies dem Client-Rechner bekannt ist.

Ein Proxy-Server mit Firewall, welcher beim Verbindungsaufbau SYN- und SYN/ACK-Pakete (OSI-Ebene 3) mit den Adressen der Nutzerendgeräte austauscht, wird in der Veröffentlichung Strother, E.: Denial of Service Protection. The Nozzle, Computer Security Applications, 2000. ACSAC '00. 16th Annual Conference New Orleans, LA, USA 11-15 December, Los Alamitos, CA, USA IEEE Comput. Soc., US 11. December 2000, Seiten 32-41 beschrieben.

Der Erfindung liegt die Aufgabe zugrunde, ein Verfahren und eine Anordnung zur transparenten Vermittlung des Datenverkehrs zwischen Datenverarbeitungseinrichtungen sowie ein entsprechendes Computerprogramm-Erzeugnis und ein entsprechendes computerlesbares Speichermedium bereitzustellen, durch welche die vorstehend genannten Nachteile behoben und insbesondere der Aufwand bei der Systemverwaltung reduziert werden soll.

Diese Aufgabe wird erfindungsgemäß gelöst durch die Merkmale im kennzeichnenden Teil der Ansprüche 1, 11, 16 und 17 im Zusammenwirken mit den Merkmalen im Oberbegriff. Zweckmäßige Ausgestaltungen der Erfindung sind in den Unteransprüchen enthalten.

Ein besonderer Vorteil des Verfahrens zur transparenten Vermittlung des Datenverkehrs zwischen Datenverarbeitungseinrichtungen besteht darin, daß bei Einsatz dieses Verfahrens Dienste transparent realisiert werden können, die die Datenverarbeitungseinrichtungen selbst nicht unterstützen, indem in die Verbindung zur Datenübertragung zwischen einer ersten Datenverarbeitungseinrichtung und einer zweiten Datenverarbeitungs- oder Kommunikationseinrichtung (Gegenstelle) ein Computersystem (Vorschaltrechner) eingebracht wird, welches den Datenverkehr zwischen der ersten Datenverarbeitungseinrichtung und der Gegenstelle vermittelt, indem es gegenüber der Gegenstelle die MAC-Adresse der ersten Datenverarbeitungseinrichtung und/ oder gegenüber der ersten Datenverarbeitungseinrichtung die MAC-Adresse der Gegenstelle imitiert.

Eine bevorzugte Ausführungsform des erfindungsgemäßen Verfahrens sieht vor, daß neben der Imitation der MAC-Adresse auch die IP-Adresse in entsprechender Weise imitiert wird. Im folgenden wird unter Adresseigenschaft einer Datenverarbeitungseinrichtung insbesondere deren MAC- und/oder IP-Adresse verstanden.

Eine Anordnung zur transparenten Vermittlung des Datenverkehrs zwischen Datenverarbeitungseinrichtungen ist vorteilhafterweise so eingerichtet, daß sie mindestens einen Chip und/oder Prozessor umfaßt, der (die) derart eingerichtet ist (sind), daß ein Verfahren zur transparenten Vermittlung des Datenverkehrs zwischen Datenverarbeitungseinrichtungen durchführbar ist, wobei die Vermittlung die Verfahrensschritte gemäß einem der Ansprüche 1 bis 10 umfaßt.

Ein Computerprogrammprodukt zur transparenten Vermittlung des Datenverkehrs zwischen Datenverarbeitungseinrichtungen umfaßt ein computerlesbares Speichermedium, auf dem ein Programm gespeichert ist, das es einem Computer ermöglicht, nachdem es in den Speicher des Computers geladen worden ist, ein Verfahren zur transparenten Vermittlung des Datenverkehrs zwischen Datenverarbeitungseinrichtungen durchzuführen, wobei die Vermittlung die Verfahrensschritte gemäß einem der Ansprüche 1 bis 10 umfaßt.
Um eine transparenten Vermittlung des Datenverkehrs zwischen Datenverarbeitungseinrichtungen durchzuführen, wird vorteilhafterweise ein computerlesbares Speichermedium eingesetzt, auf dem ein Programm gespeichert ist, das es einem Computer ermöglicht, nachdem es in den Speicher des Computers geladen worden ist, ein Verfahren zur transparenten Vermittlung des Datenverkehrs zwischen Datenverarbeitungseinrichtungen durchzuführen, wobei die Vermittlung die Verfahrensschritte gemäß einem der Ansprüche 1 bis 10 umfaßt.

In einer bevorzugten Ausführungsform des erfindungsgemäßen Verfahrens ist vorgesehen, daß die Vermittlung des Datenverkehrs die Überwachung des Datenverkehrs, Schutz gegen Viren und/oder das Verändern von Daten und/oder Datenpaketen wie Ver- und Entschlüsselung, das Hinzufügen und/oder Entfernen von Daten und/oder Datenpaketen umfasst. Vorteilhafterweise wird die Vermittlung des Datenverkehrs durch ein auf dem Vorschaltrechner implementiertes Regelwerk gesteuert. Weiterhin ist es von Vorteil, wenn der Vorschaltrechner die Funktion eines transparenten Firewalls und/oder eines transparenten Proxy-Systems übernimmt.

In einer anderen bevorzugten Ausführungsform der Erfindung ist vorgesehen, daß der Vorschaltrechner Verbindungen entgegennimmt, welche an die erste Datenverarbeitungseinrichtung adressiert sind. Insbesondere erweist es sich als Vorteil, wenn der Vorschaltrechner durch Imitation der Adresse der ersten Datenverarbeitungseinrichtung anstelle dieser ersten Datenverarbeitungseinrichtung Funktionen ausführt, welche die erste Datenverarbeitungseinrichtung nicht oder nicht in vollem Umfange bereitstellt.

Ebenso ist es von Vorteil, wenn der Vorschaltrechner unabhängig von der ersten Datenverarbeitungseinrichtung, selbständig Verbindungen aufbaut, wenn der Vorschaltrechner eine eigene Adresse besitzt, über die er direkt kontaktierbar ist. Damit wird beispielsweise ermöglicht, daß der Vorschaltrechner über die eigene Adresse bedient und/oder administriert wird. Der selbständige Verbindungsaufbau des Vorschaltrechners kann dabei unter Verwendung der eigenen Adresse des Vorschaltrechners erfolgen oder, indem der Vorschaltrechner die Adresse der ersten Datenverarbeitungseinrichtung benutzt.

Des weiteren erweist es sich als vorteilhaft, wenn das Computersystem als Vorschaltrechner für mehrere erste Datenverarbeitungseinrichtungen dient, wobei das Computersystem die Verbindungen der einzelnen ersten Datenverarbeitungseinrichtungen behandelt und/oder vermittelt, indem es für jede Verbindung die Adressdaten der jeweils konnektierten ersten Datenverarbeitungseinrichtung imitiert.

In Abhängigkeit vom Einsatzgebiet der Erfindung kann es sich als Vorteil erweisen, wenn der Vorschaltrechner die Adresseigenschaften des ersten Datenverarbeitungseinrichtung(en) automatisch aus den zu vermittelnden Daten entnimmt oder alternativ vorgegebene Adressdaten zur Imitation der ersten Datenverarbeitungseinrichtung(en) verwendet. Desgleichen kann es sich als Vorteil erweisen, wenn der Vorschaltrechner durch die erste Datenverarbeitungseinrichtung gesteuert wird, oder aber alternativ, daß die Funktion des Vorschaltrechners durch die erste Datenverarbeitungseinrichtung nicht beeinflussbar ist.

Ein weiterer Vorteil der Erfindung ist darin zu sehen, daß damit der Datenaustausch ganz unterschiedlicher Endgeräte transparent vermittelt werden kann. So kann beispielsweise die erste Datenverarbeitungseinrichtung als PC, Notebook, eingebettetes Computersystem oder Handheld-PC wie Palmtop oder Personal Digital Assistant (PDA) oder die Gegenstelle als PC, Notebook, eingebettetes Computersystem, Handheld-PC wie Palmtop oder Personal Digital Assistant (PDA) oder Telefon oder Funktelefon ausgebildet sein. Dabei ist der Einsatz der Erfindung als eingebettetes Computersystem von besonderem Interesse, da hiermit eine optimale Ergänzung bereits vorhandener anderer eingebetteter Systeme realisiert wird. Denn eingebettete Systeme, wie sie etwa zur Steuerung von Maschinen, in der Fahrzeugtechnik, in Fahrkartenautomaten oder in Haushaltsgeräten verwendet werden, verfügen in aller Regel nur über einen eingeschränkten Funktionsumfang, die erforderlichen Sicherheitsfunktionen werden nunmehr von dem erfindungsgemäßen Vorschaltcomputersystem hinzugefügt. Als Verbindung zur Datenübertragung können je nach Erfordernis Kabelverbindungen, Funkverbindungen und/oder ein Daten- und/oder Kommunikationsnetz wie ein Intra- oder das Internet genutzt werden

Durch die Erfindung kann die Kommunikation eines Computers beliebig gesteuert werden, ohne dass Veränderungen am Computer oder beim Kommunikationspartner vorgenommen werden müsse. So sind zum Beispiel Sicherheitsfunktionen implementierbar, für die es ohne Veränderung am Computersystem keine Unterstützung geben würde. So steht etwa VPN (Virtual Private Network, zum Beispiel IPSec) nicht für alle Betriebssysteme oder Rechner zur Verfügung.

Die Erfindung soll im Folgenden beispielhaft an einem zusätzlichen Computersystem (Vorschalt-Computersystem) beschrieben werden, welches in die Netzwerkanbindung eines Hauptrechners eingebracht wird und den Netzverkehr verarbeitet und dabei neue Datenpakete transparent einfügt und/oder durchlaufende Datenpakete be- und verarbeitet und/oder Datenpakte entfernt. Dabei können entweder selektiv einzelne Pakete und/oder Verbindungen oder alle Pakete und/oder Verbindungen betroffen sein. Die Auswahl und Art der Verarbeitung wird durch ein Regelwerk auf dem Vorschalt-Computersystem bestimmt. Die Verarbeitung kann zum Beispiel dadurch erfolgen, dass die betreffenden Pakete und/oder Verbindungen als lokale Pakete und/oder Verbindungen bezogen auf dieses zweite Computersystem betrachtet und behandelt werden. Dabei erscheint für den betroffenen Hauptrechner sowie Für die Kommunikationspartner das eingebrachte Computersystem transparent.

### Transparenz

Hardware, die in Netzwerke in transparenter Art und Weise eingebracht werden, sind zum Beispiel Bridges und Switches, im Gegensatz zu Routern. Diese Komponenten dienen der Steuerung des Datentransports, so dass zum Beispiel Datenpakete nur in diejenigen Teile des Netzwerkes geleitet werden, in denen sie benötigt werden. Hierdurch wird die Netzbelastung reduziert. Weiterhin können Methoden zum Zugriffsschutz basierend auf Adressen (MAC, IP, weitere) oder Anschlusseigenschaften realisiert werden. Soll ein Paket durchgelassen werden, so wird es unverändert transportiert. Eine Bridge oder ein Switch erscheinen daher transparent.

Eine Möglichkeit, ein VPN einzurichten, besteht dann darin, einen Router mit VPN-Funktionen zu verwenden. Ein Router unterteilt Netzwerke in Teilnetze. Durch die Einbringung eines Routers muss eine Veränderung der (IP-)Adressen erfolgen. Er ist also nicht transparent. Hierdurch ergibt sich zusätzlicher Aufwand bei der Systemverwaltung.

Dieses Problem wird durch das vorgeschlagene neue Vorschalt-Computersystem gelöst. Das vorgeschaltete Computersystem nimmt die Pakete vom Hauptrechner entgegen und verarbeitet sie zum Beispiel durch Verschlüsselung. Die Datenpakete werden dann durch den Vorschaltcomputer in verarbeiteter Form weiterversandt, wobei der Vorschaltcomputer die Adressdaten, zum Beispiel IP-Adresse und MAC-Adresse des Hauptrechners imitiert. Entsprechend werden die eingehenden Datenpakete verarbeitet (zum Beispiel entschlüsselt) und an den Hauptrechner weitergeleitet. Dabei übernimmt der Vorschaltrechner die Parameter der eingehenden Verbindung. Durch das Imitieren der Adressen entfällt die Notwendigkeit der Umkonfiguration der anderen Netzwerkkomponenten: Für die anderen beteiligten Rechner erscheint der Vorgang transparent.

Im Rahmen dieses Konzepts ist es nicht notwendigerweise so, dass jedem Paket vom/oder zum Hauptrechner ein Datenpaket auf dem Rest des Netzwerks entspricht. Möglicherweise werden hierbei zusätzliche Pakete erzeugt (zum Beispiel Handshake) oder entfernt. Auch die Anwendung der Proxy-Technik ist möglich.

In Abhängigkeit der jeweiligen Erfordernisse oder des Einsatzbereichs des Vorschaltrechners kann der Vorschaltrechner die Adressinformationen für die imitierten Verbindungen aus Datenpaketen es Hauptrechners (der Hauptrechner) entnehmen und/oder Informationen verwenden, die von einem Systemadministrator eingestellt werden.

Das Konzept des transparenten Vorschaltrechners kann nicht nur auf die Verschlüsselung angewendet werden.

Basierend auf den eingestellten Regeln kann der Vorschaltrechner beispielsweise auch Verbindungen vom oder zum Hauptrechner unterbinden, also als transparente Firewall funktionieren.

Ebenso kann der Vorschaltrechner so konfiguriert sein, daß er Verbindungen entgegennimmt, die an den Hauptrechner adressiert waren. Auf diese Art und Weise lassen sich Dienste realisieren, die der Hauptrechner selbst nicht unterstützt. Zum Beispiel kann ein Verwaltungsdienst installiert werden, etwa basierend auf dem SNMP (Simple Network Management Protocol), mit dem eine Ferndiagnose möglich ist. Der Vorschaltrechner nimmt die Verbindung entgegen und stellt selbst Diagnose- und Verwaltungsmöglichkeiten zur Verfügung, die der Hauptrechner nicht oder nicht im gleichen Umfang bereitstellt (oder nicht öffentlich bereitstellen soll).

Die Funktionalität des Vorschaltrechner kann auch darin bestehen, daß der Vorschaltrechner selbst, unabhängig vom Hauptrechner Verbindungen aufbaut, etwa um Konfigurationsdaten zu erhalten oder um Statusmeldungen auszugeben.

Außerdem kann der Vorschaltrechner so eingerichtet sein, daß er Überwachungsfunktionen übernimmt, so dass versuchte oder aufgebaute Verbindungen an eine zentrale Station übermittelt werden (zum Beispiel für ein Instruktion Detection System).

Verarbeitung von Daten/Datenpaketen des Datenverkehrs Die Vermittlung des Datenverkehrs kann die Verarbeitung von Daten oder Datenpaketen erfordern. Die Verarbeitung von Datenpaketen ist dabei für beliebige Pakete möglich. So wird zum Beispiel für DSL-Verbindungen (DSL = Digital Subsriber Line) häufig eine PPPoE-Verbindung (Point-to-Point Protocol over Ethernet) eingesetzt. Hierbei sind die IP-Pakete in PPPoE-Pakete eingepackt, die wiederum als Ethernet-Pakete transportiert werden. Der Vorschaltrechner kann hier zum Beispiel die PPPoE-Ummantelung entfernen und Verarbeitungsregeln (Firewall, VPN, Virenschutz) auf die eingepackten Pakete anwenden. Die verarbeiteten (zum Beispiel verschlüsselten) Pakete können nun wieder mit der PPPoE-Ummantelung eingepackt und weitertransportiert werden.

Verwendung des Vorschaltrechners für mehrere Hauptrechner Ein weiterer wichtiger Einsatz des erfindungsgemäßen Computersystems kann beispielsweise darin bestehen, daß der Vorschaltrechner so realisiert ist, dass er die Verbindungen mehrerer Hauptrechner bedient. So können für alle Hauptrechner zusätzliche Funktionen, wie zum Beispiel VPN, bereitgestellt werden. Dabei imitiert der Vorschaltrechner jeweils die Adresseigenschaften der Hauptrechner. Für das restliche Netzwerk scheint es so, als ob jeder Hauptrechner unabhängig vom anderen wäre.

### Eigene Adressierbarkeit

Eine weitere mögliche Ausführung der Erfindung kann so realisiert sein, dass der Vorschaltrechner über eigene Adressen verfügt. Dann kann man den Vorschaltrechner unabhängig vom Hauptrechner erreichen. Hierdurch kann etwa der Vorschaltrechner bedient und administriert werden, um zum Beispiel die Eigenschaften einzustellen, die der Vorschaltrechner hinsichtlich der Behandlung der transparenten Verbindungen der Hauptrechner hat.

### Implementierung

Der Vorschaltrechner ist ein unabhängiger Rechner mit Prozessor, Programm- und Datenspeicher sowie den Schnittstellen für die Datenkommunikation. Der Vorschaltrechner so konfiguriert sein, daß es möglich ist, ihn vom Hauptrechner aus automatisch zu steuern. In einer besonders sicherheitsorientierten Version läuft der Vorschaltrechner jedoch völlig unabhängig vom Hauptrechner.

### Schnittstellen

Die Schnittstellen, die der Vorschaltrechner bedient, können dabei insbesondere Ethernet-Schnittstellen sein, aber auch serielle Schnittstellen, Bus-Systeme wie PCI, PCMCIA und so weiter. Der Vorschaltrechner kann an allen Stellen eingebaut werden, an denen Netzwerkdaten transportiert werden. Auf diese Art und Weise kann der Vorschaltcomputer sowohl als eigenständiges Gerät realisiert seine als auch als Baugruppe oder als Chip zum Einbau in einen anderen Computer.

Um das erfindungsgemäße Vorschaltcomputersystem zu Miniaturisieren, z.B., um ihn den Anforderungen mobiler Hauptrechner anzupassen, kann der Vorschaltrechner beispielsweise als "Embedded System", Einplatinencomputer oder Chiplösung realisiert sein. Eine spezielle Ausführungsform sieht bspw. vor, den Vorschaltrechner in Form einer speziellen Netzwerkkarte in einen Hauptrechner zu implementieren. Eine andere, ihn in eine Ethernet-Verbindung einzubringen; wieder eine andere, ihn in ein Modem einzubauen; eine weitere, ihn in das Netzwerkverbindungskabel zu integrieren.

Die Erfindung ist nicht beschränkt auf die hier dargestellten Ausführungsbeispiele. Vielmehr ist es möglich, durch Kombination und Modifikation der genannten Mittel und Merkmale weitere Ausführungsvarianten zu realisieren, ohne den Rahmen der Erfindung zu verlassen.

## Patentansprüche

1. Verfahren zur transparenten Vermittlung des Datenverkehrs zwischen Datenverarbeitungseinrichtungen, wobei in die Verbindung zur Datenübertragung zwischen einer ersten Datenverarbeitungseinrichtung und einer zweiten Datenverarbeitungs- oder Kommunikationseinrichtung ein Computersystem eingebracht wird, welches den Datenverkehr zwischen der ersten Datenyerarbeitungs-einrichtung und der zweiten Datenverarbeitungs- oder Kommunikationseinrichtung vermittelt,
**dadurch gekennzeichnet, dass**
das Computersystem gegenüber der zweiten Datenverarbeitungs- oder Kommunikationseinrichtung die MAC-Adresse, MAC = Media Access Control, der ersten Datenverarbeitungseinrichtung und/oder gegenüber der ersten Datenverarbeitungseinrichtung die MAC-Adresse der zweiten Datenverarbeitungs- oder Kommunikationseinrichtung imitiert.

2. Verfahren nach Anspruch 1,
**dadurch gekennzeichnet, dass**
die Vermittlung des Datenverkehrs
- die Überwachung des Datenverkehrs,
- Schutz gegen Viren und/oder
- das Verändern von Daten und/oder Datenpaketen wie Ver- und Entschlüsselung, das Hinzufügen und/oder Entfernen von Daten und/oder Datenpaketen
umfasst.

3. Verfahren nach Anspruch 1 oder 2,
**dadurch gekennzeichnet, dass**
das Computersystem Verbindungen entgegennimmt, welche an die erste Datenverarbeitungseinrichtung adressiert sind.

4. Verfahren nach einem der voranstehenden Ansprüche,
**dadurch gekennzeichnet, dass**
das Computersystem durch Imitation der Adresse der ersten Datenverarbeitungseinrichtung anstelle dieser ersten Datenverarbeitungseinrichtung Funktionen ausführt, welche die erste Datenverarbeitungseinrichtung nicht oder nicht in vollem Umfange bereitstellt.

5. Verfahren nach einem der voranstehenden Ansprüche,
**dadurch gekennzeichnet, dass**
das Computersystem als Vorschaltrechner für mehrere erste Datenverarbeitungseinrichtungen dient, wobei das Computersystem die Verbindungen der einzelnen ersten Datenverarbeitungseinrichtungen behandelt und/oder vermittelt, indem es für jede Verbindung die Adressdaten der jeweils konnektierten ersten Datenverarbeitungseinrichtung imitiert.

6. Verfahren nach einem der voranstehenden Ansprüche,
**dadurch gekennzeichnet, dass**
das Computersystem eine eigene Adresse besitzt, über die es direkt kontaktiert wird.

7. Verfahren nach Anspruch 6,
**dadurch gekennzeichnet, dass**
das Computersystem unter Verwendung der eigenen Adresse oder unter Verwendung der Adresse der ersten Datenverarbeitungseinrichtung, unabhängig von der ersten Datenverarbeitungseinrichtung, selbständig Verbindungen aufbaut.

8. Verfahren nach einem der voranstehenden Ansprüche,
**dadurch gekennzeichnet, dass**
das Computersystem Adresseigenschaften einer ersten Datenverarbeitungseinrichtung automatisch aus den zu vermittelnden Daten entnimmt oder vorgegebene Adressdaten zur Imitation der ersten Datenverarbeitungseinrichtung verwendet.

9. Verfahren nach einem der voranstehenden Ansprüche,
**dadurch gekennzeichnet, dass**
das Computersystem durch die erste Datenverarbeitungseinrichtung gesteuert wird.

10. Verfahren nach einem der Ansprüche 1 bis 8,
**dadurch gekennzeichnet, dass**
die Funktion des Computersystems durch die erste Datenverarbeitungseinrichtung nicht beeinflusst wird.

11. Anordnung mit mindestens einem Chip und/oder Prozessor, die derart eingerichtet sind, ein Verfahren zur transparenten Vermittlung des Datenverkehrs zwischen Datenverarbeitungseinrichtungen durchzuführen, wobei die Vermittlung alle Verfahrensschritte eines der Ansprüche 1 bis 10 umfasst.

12. Anordnung nach Anspruch 11,
**dadurch gekennzeichnet, dass**
die Anordnung als
- Firewall oder
- transparentes Proxy-System
ausgebildet ist.

13. Anordnung nach einem der Ansprüche 11 oder 12,
**dadurch gekennzeichnet, dass**
die Anordnung als
- eingebettetes System,
- Einplatinenrechner oder
- System on Chip
ausgebildet ist.

14. Anordnung nach einem der Ansprüche 11 bis 13,
**dadurch gekennzeichnet, dass**
die Anordnung
- in eine Netzwerkkarte,
- in eine Ethernet-Verbindung
- in ein Modem oder
- in ein Kabel für die Datenübertragung
integriert ist.

15. Anordnung nach einem der Ansprüche 11 bis 14,
**dadurch gekennzeichnet, dass**
die Anordnung
- eine oder mehrere Ethernet-Schnittstellen,
- eine oder mehrere serielle Schnittstellen und/oder
- ein oder mehrere Bus-Systeme wie PCI- oder PCMCIA-Bus aufweist.

16. Computerprogramm, das es einem Computer ermöglicht, nachdem es in den Speicher des Computers geladen worden ist, ein Verfahren zur transparenten Vermittlung des Datenverkehrs zwischen Datenverarbeitungseinrichtungen durchzuführen, wobei die Vermittlung alle Verfahrensschritte eines der Ansprüche 1 bis 10 umfasst.

17. Computerlesbares Speichermedium, auf dem ein Programm gespeichert ist, das es einem Computer ermöglicht, nachdem es in den Speicher des Computers geladen worden ist, ein Verfahren zur transparenten Vermittlung des Datenverkehrs zwischen Datenverarbeitungseinrichtungen durchzuführen, wobei die Vermittlung alle Verfahrensschritte eines der Ansprüche 1 bis 10 umfasst.

## Claims

1. Method for transparent transmission of data traffic between data processing devices, where a computer system is introduced in the connection for data transmission between a first data processing device and a second data processing device or communication device, wherein the computer system transmits the data traffic between the first data processing device and the second data processing device,
**characterized in that**
the computer system imitates the MAC address, MAC = Media Access Control, of the first data processing device to the second data processing device and/or imitates the MAC address of the second data processing device to the first data processing device.

2. Method according to claim 1,
**characterized in that**
transmission of the data traffic includes
- monitoring the data traffic,
- protecting against viruses and/or
- modifying data and/or data packets, such as encrypting and decrypting, adding and/or removing of data and/or data packets.

3. Method according to claim 1 or 2,
**characterized in that**
the computer system receives connections addressed to the first data processing device.

4. Method according to one of the preceding claims,
**characterized in that**
the computer system, rather than the first data processing device, executes functions by imitating the address of the first data processing device, which functions the first data processing device does not provide or does not provide in full.

5. Method according to one of the preceding claims,
**characterized in that**
the computer system serves as an computer system for several first data processing devices, wherein the computer system processes and/or transmits the connections of the individual first data processing devices by imitating for each connection the address data of the corresponding connected first data processing device.

6. Method according to one of the preceding claims,
**characterized in that**
the computer system has its own address which is used for directly contacting the computer system.

7. Method according to claim 6,
**characterized in that**
the computer system independently sets up connections by using its own address or by using the address of the first data processing device, independent of the first data processing device.

8. Method according to one of the preceding claims,
**characterized in that**
the computer system obtains the address properties of a first data processing device automatically from the data to be transmitted, or uses predefined address data for imitating the first data processing device.

9. Method according to one of the preceding claims,
**characterized in that**
the computer system is controlled by the first data processing device.

10. Method according to one of the claims 1 to 8,
**characterized in that**
the function of the computer system is not influenced by the first data processing device.

11. Arrangement with at least one chip and/or processor, which are configured for executing a method for transparent transmission of the data traffic between data processing devices, wherein the transmission includes all method steps of one of the claims 1 to 10.

12. Arrangement according to claim 11,
**characterized in that**
the arrangement is implemented as
- a firewall, or
- a transparent proxy system.

13. Arrangement according to one of the claims 11 or 12,
**characterized in that**
the arrangement is implemented as
- an embedded system,
- a single-board computer, or
- a system-on-a-chip.

14. Arrangement according to one of the claims 11 to 13,
**characterized in that**
the arrangement is integrated in
- a network card,
- an Ethernet connection,
- a modem, or
- a data transmission cable.

15. Arrangement according to one of the claims 11 to 14,
**characterized in that**
the arrangement includes
- one or several Ethernet interfaces,
- one or several serial interfaces, and/or
- one or several bus systems, such as PCI or PCMCIA bus.

16. Computer program which, after being loaded into the memory of a computer, enables the computer to execute a method for transparent transmission of data traffic between data processing devices, wherein the transmission includes all method steps of one of the claims 1 to 10.

17. Computer-readable storage medium storing a program which, after being loaded into the memory of a computer, enables the computer to execute a method for transparent transmission of data traffic between data processing devices, wherein the transmission includes all method steps of one of the claims 1 to 10.

## Revendications

1. Procédé de transmission transparente du trafic de données entre des systèmes de traitement de données, dans lequel un système informatique est introduit dans une connexion de transmission de données entre un premier système de traitement de données et un second système de traitement de données ou système de communication, le système informatique transmettant le trafic de données entre le premier système de traitement de données et le second système de traitement de donnés ou système de communication,
**caractérisé en ce que**
le système informatique imite l'adresse MAC (MAC = Media Access Control) du premier système de traitement de données envers le second système de traitement de données ou système de communication, et/ou imite l'adresse MAC du second système de traitement de données ou système de communication envers le premier système de traitement de données.

2. Procédé selon la revendication 1,
**caractérisé en ce que**
la transmission du trafic de données comprend
- la surveillance du trafic de données,
- la protection contre les virus, et/ou
- la modification de données, et/ou de paquets de données, telle que le codage ou le décodage, l'ajout et/ou la suppression de données et/ou de paquets de données.

3. Procédé selon la revendication 1 ou 2,
**caractérisé en ce que**
le système informatique accepte des connexions qui sont adressées au premier système de traitement de données.

4. Procédé selon l'une des revendications précédentes,
**caractérisé en ce que,**
grâce à l'imitation de l'adresse du premier système de traitement de données, le système informatique exécute des fonctions à la place de ce premier système de traitement de données que le premier système de traitement de données ne fournit pas ou ne fournit pas entièrement.

5. Procédé selon l'une des revendications précédentes,
**caractérisé en ce que**
le système informatique sert d'ordinateur frontal à plusieurs premiers systèmes de traitement de données, le système informatique traitant et/ou transmettant les connexions de chaque premier système de traitement de données en imitant, pour chaque connexion, les données d'adresse du premier système de traitement de données respectivement connecté.

6. Procédé selon l'une des revendications précédentes,
**caractérisé en ce que**
le système informatique a une propre adresse via laquelle il est contacté directement.

7. Procédé selon la revendication 6,
**caractérisé en ce que**
le système informatique établit des connexions de manière autonome, indépendamment du premier système de traitement de données, en utilisant sa propre adresse ou en utilisant l'adresse du premier système de traitement de données.

8. Procédé selon l'une des revendications précédentes,
**caractérisé en ce que**
le système informatique déduit les propriétés d'adresse d'un premier système de traitement de données automatiquement des données à transmettre, ou qu'il utilise des données d'adresse prédéfinies pour imiter le premier système de traitement de données.

9. Procédé selon l'une des revendications précédentes,
**caractérisé en ce que**
le système informatique est commandé par le premier système de traitement de données.

10. Procédé selon l'une des revendications 1 à 8,
**caractérisé en ce que**
la fonction du système informatique n'est pas influencée par le premier système de traitement de données.

11. Dispositif ayant au moins une puce et/ou un processeur qui sont réalisés de manière à exécuter un procédé de transmission transparente du trafic de données entre des systèmes de traitement de données, la transmission comprenant toutes les étapes de procédé selon l'une des revendications 1 à 10.

12. Dispositif selon la revendication 11,
**caractérisé en ce que**
le dispositif est réalisé en tant que
- pare-feu ou
- système mandataire transparent.

13. Dispositif selon l'une des revendications 11 ou 12,
**caractérisé en ce que**
le dispositif est réalisé en tant que
- système intégré,
- ordinateur monocarte, ou
- système sur puce.

14. Dispositif selon l'une des revendications 11 à 13,
**caractérisé en ce que**
le dispositif est intégré dans
- une carte réseau,
- une connexion Ethernet,
- un modem, ou
- un câble pour la transmission de données.

15. Dispositif selon l'une des revendications 11 à 14,
**caractérisé en ce que**
le dispositif comprend
- une ou plusieurs interfaces Ethernet,
- une ou plusieurs interfaces sérielles, et/ou
- un ou plusieurs systèmes de bus comme un bus PCI ou un bus PCMCIA.

16. Programme informatique permettant à un ordinateur d'exécuter un procédé de transmission transparente du trafic de données entre des systèmes de traitement de données, après que le programme informatique ait été chargé dans la mémoire de l'ordinateur, la transmission comprenant toutes les étapes de procédé selon l'une des revendications 1 à 10.

17. Support d'enregistrement lisible par ordinateur sur lequel est enregistré un programme qui permet à un ordinateur d'exécuter un procédé de transmission transparente du trafic de données entre des systèmes de traitement de données, après que le programme informatique ait été chargé dans la mémoire de l'ordinateur, la transmission comprenant toutes les étapes de procédé selon l'une des revendications 1 à 10.
